Europäisches Patentamt

European Patent Office

Office européen des brevets

(19)

(11) Numéro de publication : **0 497 676 A1**

# (12) DEMANDE DE BREVET EUROPEEN

(21) Numéro de dépôt : **92400201.7**

(22) Date de dépôt : **27.01.92**

(51) Int. Cl.⁵ : **H01G 9/02**

(30) Priorité : **28.01.91 FR 9100921**

(43) Date de publication de la demande :
**05.08.92 Bulletin 92/32**

(84) Etats contractants désignés :
**BE DE ES GB IT NL SE**

(71) Demandeur : **BOLLORE TECHNOLOGIES**
**Odet**
**F-29000 Quimper (FR)**

(72) Inventeur : **Lallemand, Denis**
**1, rue de Scaer**
**F-29114 Saint Thurien (FR)**

(74) Mandataire : **Martin, Jean-Jacques et al**
**Cabinet REGIMBEAU 26, Avenue Kléber**
**F-75116 Paris (FR)**

(54) **Séparateur pour condensateurs électrolytiques et condensateurs ainsi formés.**

(57)   La présente invention concerne un séparateur pour condensateurs électrolytiques, caractérisé par le fait qu'il est formé d'une feuille de papier unique composée d'au moins deux couches superposées dissymétriques (31, 32) : l'une (31) de forte épaisseur et de faible densité, l'autre (32) de faible épaisseur et de forte densité.

FIG.3

EP 0 497 676 A1

Jouve, 18, rue Saint-Denis, 75001 PARIS

La présente invention concerne le domaine des séparateurs pour condensateurs électrolytiques, ainsi que les condensateurs électrolytiques eux-mêmes.

On appelle communément "séparateur pour condensateur électrolytique", une réserve contenant un liquide électrolytique imprégnant constamment les deux électrodes (anode et cathode) du condensateur. L'invention s'applique en particulier aux condensateurs électrolytiques utilisés à des tensions de service supérieures à 100 Volts en courant continu. L'invention s'applique également aux condensateurs électrolytiques utilisés à toutes tensions en courant alternatif sinusoïdal ou non.

Les séparateurs classiques utilisés de nos jours pour la fabrication de condensateurs électrolytiques sont composés généralement d'une ou plusieurs feuilles de papier, ou films de papier. Ces feuilles de papier sont d'épaisseurs et/ou de densités différentes selon la caractéristique finale que l'on veut privilégier. La démarche générale suivie pour définir l'épaisseur et la densité des différentes feuilles de papier utilisées est la suivante.

Pour un condensateur dans lequel on souhaite privilégier la durée de vie, le séparateur sera formé de plusieurs feuilles épaisses. L'espace disponible entre les électrodes sera maximum pour contenir un maximum d'électrolyte ; cependant se sera notamment au détriment de l'encombrement qui deviendra très important.

Pour un condensateur dans lequel on souhaite privilégier une faible résistance série, le séparateur sera formé d'un petit nombre de feuilles peu denses. La "visibilité" entre les électrodes sera maximum, mais se sera surtout au détriment de la durée de vie par manque d'électrolyte et/ou par création d'arcs électriques.

Pour un condensateur dans lequel on souhaitera privilégier un faible incombrement, le séparateur sera mince et dense au détriment de la résistance série et de la durée de vie.

On comprend à la lecture de ce qui précède, que les séparateurs jusqu'ici proposés, s'ils permettent de privilégier un paramètre important, le font généralement au détriment d'autres paramètres non négligeables.

D'autres solutions modifiant légèrement les cas de figures précédemment cités, ont également été proposés.

Ainsi par exemple on a proposé des papiers dits "duplex" formés de différentes couches cellulosiques identiques.

On a également proposé des papiers composés d'un mélange dans la masse monocouche de fibres cellulosiques et de fibres synthétiques. Ces papiers ont notamment l'avantage de baisser la résistance série.

D'autres substitutions ont également été tentées, en chargeant le papier, en l'assemblant avec un film microperforé, en l'imprégnant ou en lui adjoignant un film. Ces substitutions n'ont cependant pas jusqu'à maintenant remplacés les séparateurs habituels décrits plus haut.

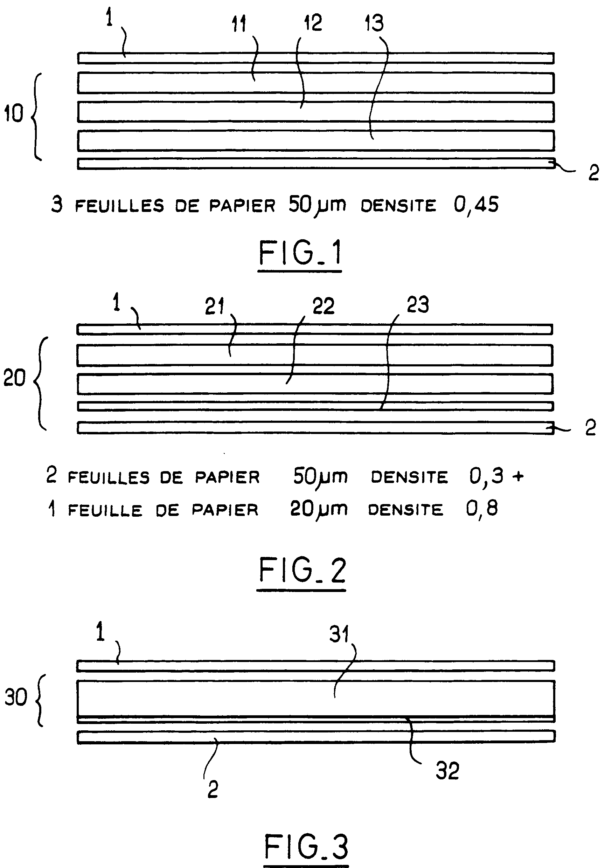

On a représenté schématiquement sur la figure 1 annexée, un premier type de séparateur couramment utilisé. On aperçoit sur la figure 1, un séparateur 10 placé entre une anode 1 et une cathode 2. Le séparateur 10 comprend trois feuilles de papier 11, 12, 13, plus précisément trois feuilles 11, 12, 13 de papier d'une épaisseur de 50μm et de densité 0,45.

On a représenté schématiquement sur la figure 2, un deuxième type de séparateur couramment utilisé. On aperçoit sur la figure 2 un séparateur 20 placé entre une anode 1 et une cathode 2. Le séparateur 20 comprend trois feuilles de papier superposées 21, 22, 23, plus précisément deux feuilles de papier 21, 22 d'une épaisseur de 50μm et de densité 0,3 et une feuille de papier 23 d'épaisseur 20μm et de densité 0,8.

L'ensemble des séparateurs jusqu'ici proposés ont déjà rendu de grands services. Cependant, ils ne donnent pas totalement satisfaction.

La présente invention a maintenant pour but de proposer un nouveau séparateur pour condensateur électrolytique permettant de réaliser des condensateurs électrolytiques aptes à fonctionner sous une tension élevée tout en améliorant les caractéristiques du condensateur, en particulier quant à son encombrement, sa durée de vie et sa résistance série.

Ce but est atteint selon la présente invention grâce à un séparateur formé d'une feuille de papier unique composée d'au moins deux couches superposées dissymétriques : l'une de forte épaisseur et de faible densité, l'autre de faible épaisseur et de forte densité.

Selon une autre caractéristique avantageuse de la présente invention, la densité de la première couche est inférieure à 0,7.

Selon une autre caractéristique avantageuse de la présente invention, la densité de la seconde couche est supérieure à 0,4, très préférentiellement supérieure à 0,7.

Selon une autre caractéristique avantageuse de la présente invention, la première couche est formée de fibres cellulosiques.

Selon une autre caractéristique avantageuse de la présente invention, la seconde couche est formée de fibres cellulosiques et/ou synthétiques.

Selon une autre caractéristique avantageuse de la présente invention, l'épaisseur de la seconde couche est comprise entre 0 et un tiers de l'épaisseur totale du séparateur.

D'autres caractéristiques, buts et avantages de la présente invention apparaîtront à la lecture de la description détaillée qui va suivre et en regard des dessins annexés donnés à titre d'exemples non limitatifs et sur lesquels :

– les figures 1 et 2 précédemment décrites représentent schématiquement deux séparateurs connus pour condensateurs électrolytiques,

– la figure 3 représente schématiquement un séparateur conforme à la présente invention pour condensateurs électrolytiques,

– la figure 4 représente un tableau donnant l'épaisseur du séparateur, la quantité d'électrolyte contenu dans celui-ci et la résistance série, pour trois séparateurs classiques et un séparateur conforme à la présente invention dans le cas de condensateurs électrolytiques de même encombrement,

– la figure 5 représente un tableau donnant les mêmes paramètres dans le cas de condensateurs électrolytiques comprenant la même quantité d'électrolyte,

– la figure 6 représente un tableau donnant les mêmes paramètres dans le cas de condensateurs électrolytiques de même résistance série, et

– la figure 7 représente schématiquement une installation pour la fabrication d'un séparateur conforme à la présente invention.

On a représenté schématiquement sur la figure 3 annexée, un séparateur conforme à la présente invention pour condensateurs électrolytiques.

On aperçoit sur cette figure 3, un séparateur 30 placé entre une anode 1 et une cathode 2.

Selon la présente invention, comme indiqué précédemment, le séparateur 30 est formé d'une feuille de papier unique composée d'au moins deux couches superposées dissymétriques 31, 32. La première couche 31 présente une forte épaisseur et une faible densité. La seconde couche 32 présente une faible épaisseur et une forte densité.

Plus précisément encore, la première couche 31 est avantageusement formée de fibres cellulosiques et présente une densité inférieure à 0,7.

La deuxième couche 32 est formée de fibres cellulosiques et/ou synthétiques. Sa densité est supérieure à 0,4, très préférentiellement supérieure à 0,7 et l'épaisseur de cette couche 32 est de préférence inférieure au tiers de l'épaisseur totale du séparateur 30.

La densité globale du séparateur bicouche conforme à la présente invention est comprise entre 0,20 et 0,9.

Les condensateurs obtenus à l'aide d'un séparateur conforme à la présente invention, seront comparés aux condensateurs antérieurement connus sur la base de trois paramètres précédemment évoqués : la durée de vie, l'encombrement total et la résistance série.

L'influence du séparateur sur ces trois paramètres importants peut être perçu de la façon suivante.

L'encombrement des électrodes étant supposé constant, c'est l'épaisseur e du séparateur qui aura le plus d'influence sur l'encombrement total final. Plus le séparateur est épais, plus le condensateur est encombrant.

La résistance série est fonction du facteur de résistance A directement mesurable sur le séparateur selon des méthodes connues. On a en effet la relation : $Rs = \rho \, eA/S$, relation dans laquelle :

$Rs$ représente la résistance série du séparateur,

$\rho$ représente la résistivité de l'électrolyte,

$e$ représente l'épaisseur du séparateur,

$S$ représente la surface des électrodes anodiques ou cathodiques, et

$A$ représente le facteur de résistance.

Pour des condensateurs de même capacité et fabriqués avec le même électrolyte, la mesure de la résistance série sur le condensateur fini, donne une bonne idée du facteur de résistance du séparateur. D'une façon générale, on peut indiquer que dans le cas d'utilisation du condensateur à des tensions supérieures à 100 volts en courant continu, la résistance série du condensateur ne doit pas être trop faible. En effet dans ce cas, la résistance au passage du courant devient trop faible pour empêcher la création d'arcs électriques destructeurs pour le condensateur et la proportion de condensateurs défectueux devient inacceptable.

La durée de vie est limitée essentiellement par les arcs électriques qui se créent entre les électrodes et qui provoquent la destruction du condensateur. Dans un condensateur électrolytique ayant une couche diélectrique convenablement formée au départ, les arcs ne se produiront pas tant que la couche diélectrique sera maintenue en état par le liquide électrolytique. La durée de vie est donc fonction de la quantité d'électrolyte contenu dans le condensateur. Plus il y a d'électrolyte, plus la durée de vie s'allonge. La quantité d'électrolyte est elle-même fonction de l'espace disponible compris entre les électrodes de signes contraires et donc proportionnelle à l'épaisseur et inversement proportionnelle à la densité du séparateur. Ces deux caractéristiques épaisseur et densité du séparateur peuvent permettre d'évaluer l'espace disponible entre les électrodes.

La densité de la fibre de cellulose étant de 1,53, la densité apparente du séparateur donne une idée du pourcentage d'espace existant dans la structure du papier.

Ce pourcentage d'espace est : $100 \, (1-d/1,53)$ relation dans laquelle d représente la densité apparente.

Ce pourcentage d'espace disponible est ensuite proportionnel à l'épaisseur. On obtient ainsi $E = 100 \, e(1-d/1,53)$ relation dans laquelle E représente l'espace disponible, tandis que e représente l'épaisseur du séparateur en mm.

Sans prendre en considération les caractéristiques du liquide électrolytique, le meilleur condensateur sera celui qui aura entre autre chose, la résistance série la plus faible, le plus petit volume et la durée de vie la plus longue. Le meilleur séparateur sera donc celui qui fournira le meilleur compromis entre l'épaisseur e, l'espace disponible E, et la résistance série Rs.

En d'autres termes, le compromis peut être ainsi résumé.

Pour un condensateur optimum : durée de vie maximum, résistance série faible et encombrement minimum, d'où pour un séparateur optimum : espace disponible maximum pour l'électrolyte, facteur A faible et épaisseur minimum.

La principale caractéristique du séparateur conforme à la présente invention est sa dissymétrie, qui permet une séparation de deux des trois paramètres précités, E et A.

Le paramètre E est principalement donné par la première couche 31 du séparateur. Le fait qu'elle soit composée de fibres cellulosiques et de faible densité lui donne un grand pouvoir absorbant et optimise l'espace disponible entre les électrodes 1 et 2. La première couche 31 sert ainsi essentiellement de réserve d'électrolyte. Son facteur de résistance A est faible.

En revanche, le facteur de résistance A est principalement donné par la deuxième couche 32. La densité forte et la faible épaisseur de cette couche sont calibrées de façon à déterminer ce facteur. Le pourcentage d'espace d'un papier de densité forte étant faible, l'épaisseur de cette couche 32 est réduite au maximum, de façon à ne pas encombrer le séparateur de matière à faible espace disponible.

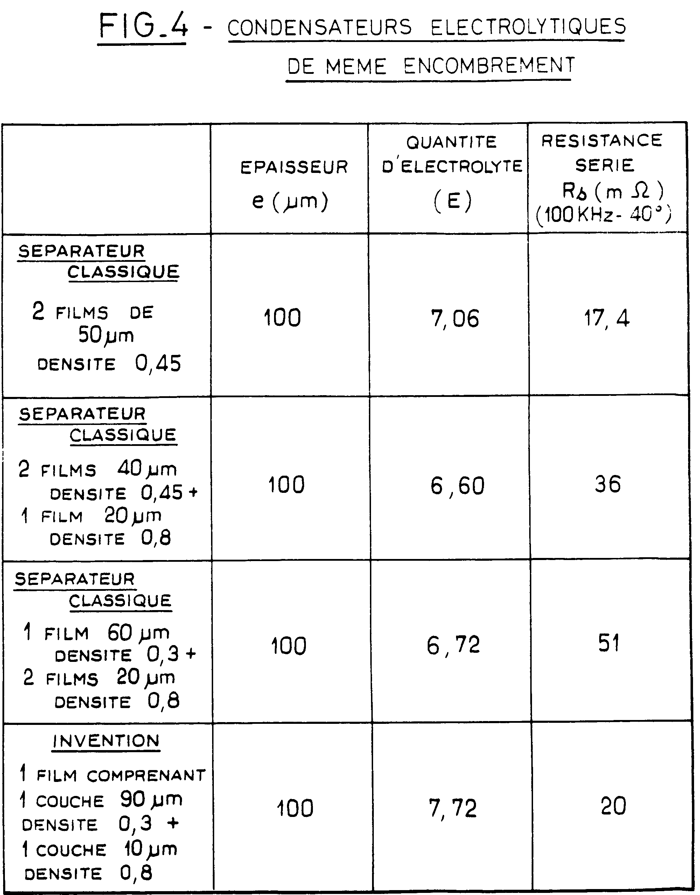

Pour bien comprendre les avantages du séparateur conforme à la présente invention par rapport aux séparateurs de la technique antérieure, on peut se reporter aux tableaux donnés sur les figures 4, 5 et 6. Ces tableaux sont des tableaux comparatifs des valeurs typiques des paramètres précités: épaisseur du séparateur e, quantité d'électrolyte E et résistance série Rs pour quatre condensateurs différents.

Dans chacun de ces tableaux, les trois premières lignes concernent des séparateurs classiques, tandis que la dernière ligne correspond à un séparateur conforme à la présente invention.

Plus précisément, le tableau donné sur la figure 4 concerne des condensateurs électrolytique de même encombrement, ce qui permet de comparer les quantités d'électrolyte et les résistances série.

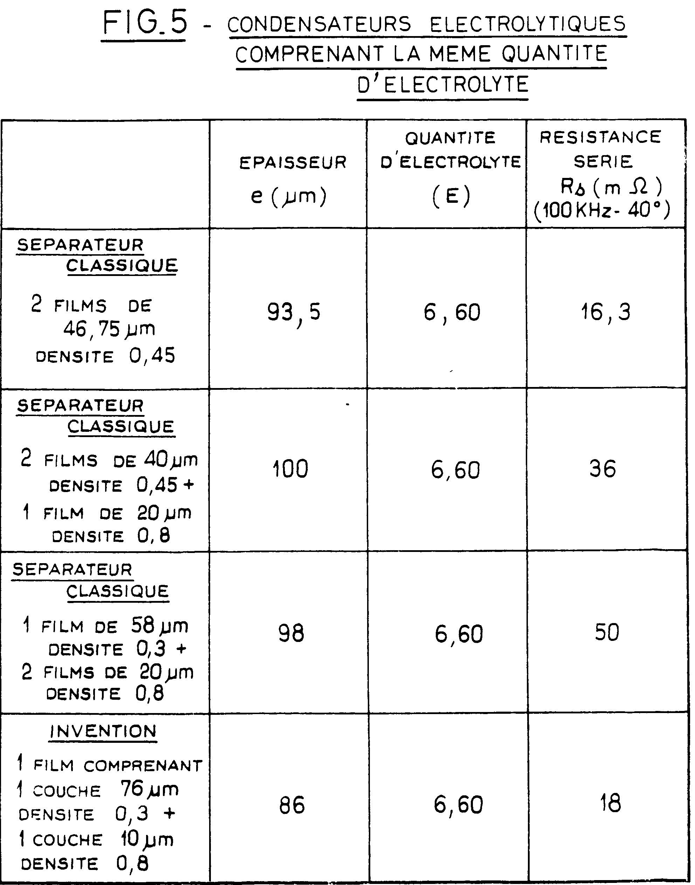

Le tableau donné sur la figure 5 correspond à quatre condensateurs contenant la même quantité d'électrolyte, ce qui permet de comparer les encombrements et les résistances série.

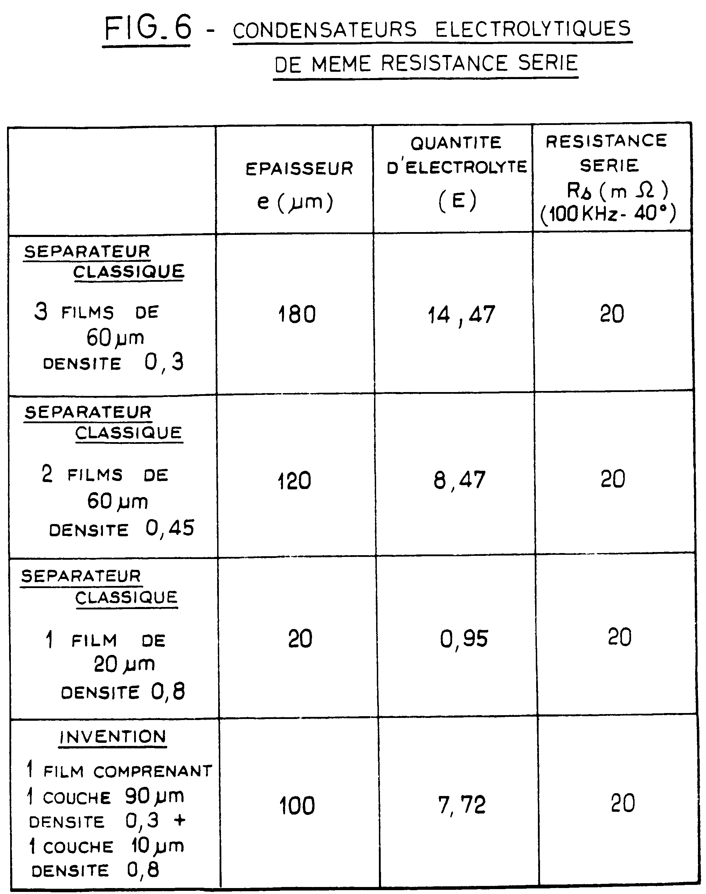

Enfin le tableau donné sur la figure 6 correspond à quatre condensateurs ayant des résistances série égales ce qui permet de comparer les encombrements et les quantités d'électrolyte.

Tous ces condensateurs sont bobinés avec les mêmes électrodes et imprégnés avec le même liquide électrolytique. Le procédé de fabrication des enroulements est également le même. La seule différence réside dans le nombre et la qualité des séparateurs utilisés.

Les électrodes utilisés sont les suivantes : l'anode est en aluminium gravée de titre 99,99 formée anodiquement à 600 volts ; son épaisseur est de 90μm. La cathode possède une épaisseur de 30μm et est réalisée en aluminium à 98%.

Le liquide électrolytique contenu dans les boîtiers est un liquide pour haute tension à base de butyrolactone.

Plus précisément sur la figure 4:
– le séparateur classique indiqué sur la première ligne comprend deux films de 50μm d'épaisseur et de densité de l'ordre de 0,45,
– le séparateur classique indiqué sur la seconde ligne comprend deux films de 40μm d'épaisseur et de densité de l'ordre de 0,45 et un film de 20μm d'épaisseur et de densité de l'ordre de 0,8,
– le séparateur classique indiqué sur la troisième ligne comprend un film de 60μm d'épaisseur et de densité de l'ordre de 0,3 et deux films de 20μm d'épaisseur et de densité de l'ordre de 0,8,
– le séparateur conforme à la présente invention indiqué sur la quatrième ligne comprend un film comprenant un couche de 90μm d'épaisseur et de densité de l'ordre de 0,3 et une couche de 10μm d'épaisseur et de densité de l'ordre de0,8.
Sur la figure 5:
– le séparateur classique indiqué sur la première ligne comprend deux films de 46,75μm d'épaisseur et de densité de l'ordre de 0,45,
– le séparateur classique indiqué sur la seconde ligne comprend deux films de 40μm d'épaisseur et de densité de l'ordre de 0,45 et un film de 20μm d'épaisseur et de densité de l'ordre de 0,8,
– le séparateur classique indiqué sur la troisième ligne comprend un film de 58μm d'épaisseur et de densité de l'ordre de 0,3 et deux films de 20μm d'épaisseur et de densité de l'ordre de 0,8,
– le séparateur conforme à la présente invention indiqué sur la quatrième ligne comprend un film comprenant une couche de 76μm d'épaisseur et de densité de l'ordre de 0,3 et une couche de 10μm d'épaisseur et de densité de l'ordre de0,8.
Sur la figure 6 :
– le séparateur classique indiqué sur la première ligne comprend trois films de 60μm d'épaisseur et de densité de l'ordre de 0,3,
– le séparateur classique indiqué sur la seconde ligne comprend deux films de 60μm d'épaisseur et de densité de l'ordre de 0,45,
– le séparateur classique indiqué sur la troisième ligne comprend un film de 20μm d'épaisseur et de densité de l'ordre de 0,8,
– le séparateur conforme à la présente invention indiqué sur la quatrième ligne comprend un film comprenant une couche de 90μm d'épaisseur et de densité de l'ordre de 0,3 et une couche de 10μm d'épaisseur et de densité de l'ordre de 0,8.

La comparaison des résultats obtenus et reportés dans les tableaux des figures 4, 5 et 6 permet de tirer les conclusions suivantes.

Dans tous les cas, le séparateur conforme à la présente invention est formé d'un film unique. Il est ainsi bien plus pratique à bobiner que les séparateurs de la technique antérieure composés généralement de différents films superposés.

On peut noter que malgré la dissymétrie du séparateur, la Demanderesse n'a pas constaté de variation de la résistance série en inversant le sens du bobinage du séparateur.

Le tableau de la figure 4 montre que pour des épaisseurs de séparateur égales, le séparateur conforme à la présente invention permet d'obtenir la plus grande quantité d'électrolyte entre les électrodes ainsi qu'une résistance série faible et acceptable.

Le tableau de la figure 5 montre que pour des contenances en électrolyte égales, le séparateur conforme à la présente invention permet le moindre encombrement associé à une très faible résistance série. Dans ce cas, la résistance série étant limite, le séparateur pourrait encore être optimisé si nécessaire. Une augmentation de quelques μm de la couche 32 permet en effet sans modification notoire de l'encombrement de donner à l'ensemble la résistance série souhaitée.

Enfin, le tableau de la figure 6 correspond à une résistance série égale pour les différents condensateurs concernés. Dans le cas du condensateur identifié sur la troisième ligne, la quantité d'électrolyte est trop faible pour être acceptable.

Si donc on exclut ce type de séparateur, on peut noter que le séparateur conforme à la présente invention a le plus petit encombrement et la plus faible quantité d'électrolyte. Cette quantité est néanmoins suffisante et sur cette caractéristique, le séparateur identifié sur la première ligne pêche plutôt par excès.

En résumé de ce qui précède, si on compare le séparateur conforme à la présente invention aux autres types de séparateur précédemment existants, il est clair que le séparateur monofilm mais bicouche conforme à la présente invention apporte avec un encombrement plus faible, une quantité d'électrolyte suffisante ainsi qu'une résistance série faible et acceptable.

On peut par ailleurs citer les avantages suivants résultant du séparateur conforme à la présente invention.

La couche 32 du séparateur étant posée sur la couche 31, il est possible de donner à cette couche 32 une épaisseur plus faible que celle qu'il aurait fallu lui donner en théorie dans un condensateur classique dans lequel les différentes couches du séparateur sont séparées.

Ceci permet de limiter l'encombrement, mais surtout la résistance série qui dans les fortes densités augmente très vite avec l'épaisseur.

Les séparateurs de densité supérieurs à 0,7 généralement utilisés apportent de la résistance série et sont des papiers principalement constitués de pâtes Kraft. Ces pâtes comportent encore une proportion non négligeable de lignine et d'hémicellulline qui ne résiste pas aux agressions des électrolytes. Ces séparateurs se décomposent rapidement et perdent de la résistance série. Ils ne peuvent alors plus empêcher les claquages.

En revanche, le nouveau séparateur conforme à la présente invention, monofilm mais bicouche, est avantageux sur ce point. Les fibres synthétiques contenues dans la couche 32 résistent aux électrolytes et maintiennent la résistance série dans le temps.

L'invention n'est pas limitée aux électrodes précédemment décrites et aux liquides électrolytiques à base de butyrolactone. Des résultats analogues sont obtenus avec d'autres électrodes et d'autres électrolytes.

Pour des utilisations à des tensions de services supérieures ou égales à 350 volts continus, la couche 32 du séparateur peut être légèrement augmentée en épaisseur pour obtenir une résistance série suffisante. Le séparateur monofilm bicouche reste cependant moins encombrant que les séparateurs antérieurement connus.

Bien entendu la présente invention n'est pas limitée aux modes de réalisation particuliers qui viennent d'être décrits.

En particulier, la présente invention n'est pas limitée à la réalisation d'un séparateur à deux couches. Des séparateurs monofeuilles tricouches peuvent également être réalisés sans sortir du cadre de la présente invention.

La réalisation des différentes couches du séparateur sous forme d'une feuille unique permet de faciliter largement le bobinage du condensateur.

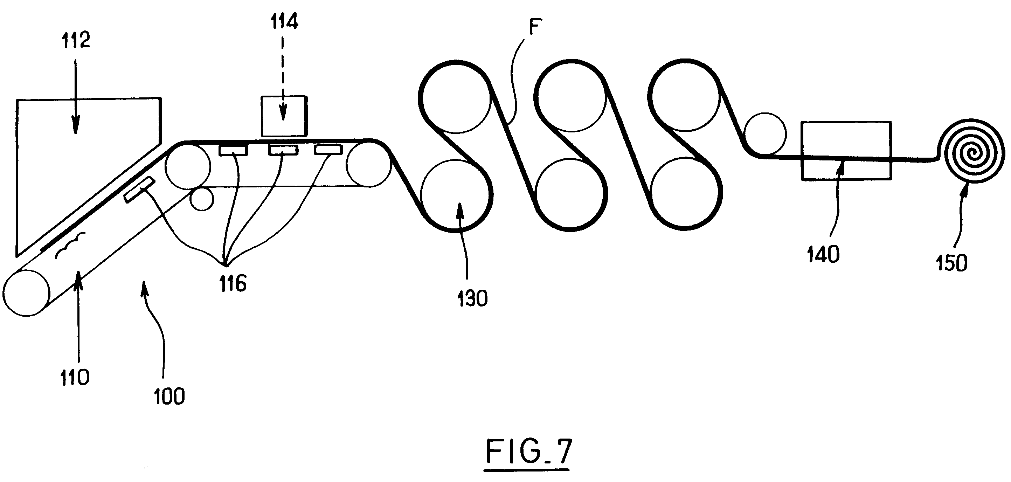

Le séparateur monofilm multicouche conforme à la présente invention, peut être réalisé à l'aide de l'installation représentée schématiquement sur la figure 7.

On aperçoit schématiquement sur la figure 7 un premier poste 100 comprenant une toile sans fin 110. Deux caisses 112, 114 sont superposées à la toile 110. La première caisse 112 contient des fibres peu raffinées pour former la première couche 31 du séparateur. La deuxième caisse 114 contient des fibres plus raffinées, de cellulose et/ou synthétiques pour former la seconde couche 32 sur la première couche 31. Des caisses aspirantes sont placées sous la toile 110, de façon connue en soi. Sur la figure 7 ces caisses aspirantes sont référencées 116.

Le poste 100 est suivi d'un poste 130 formé de différents rouleaux entre lesquels est introduit le film F. Enfin le fim F est dirigé vers un poste 140 conçu pour réticuler le film F sans affecter la porosité de celui-ci. Le film est ensuite bobiné sur un enrouleur 150.

Bien entendu la présente invention n'est pas limitée aux modes de réalisation précédemment décrits, mais s'étend à toutes variantes conformes à son esprit.

## Revendications

1. Séparateur pour condensateurs électrolytiques, caractérisé par le fait qu'il est formé d'une feuille de papier unique composée d'au moins deux couches superposées dissymétriques (31, 32): l'une (31) de forte épaisseur et de faible densité, l'autre (32) de faible épaisseur et de forte densité.

2. Séparateur selon la revendication 1, caractérisé par le fait que la densité de la première couche (31) est inférieure à 0,7.

3. Séparateur selon l'une des revendications 1 ou 2, caractérisé par le fait que la densité de la seconde couche (32) est supérieure à 0,4, de préférence supérieure à 0,7.

4. Séparateur selon l'une des revendications 1 à 3, caractérisé par le fait que la première couche (31) est formée de fibres cellulosiques.

5. Séparateur selon l'une des revendications 1 à 4, caractérisé par le fait que la seconde couche (32) est formée de fibres cellulosiques.

6. Séparateur selon l'une des revendications 1 à 5, caractérisé par le fait que la seconde couche (32) est formée de fibres synthétiques.

7. Séparateur selon l'une des revendications 1 à 6, caractérisé par le fait que la seconde couche (32) est formée de fibres cellulosiques et synthétiques.

8. Séparateur selon l'une des revendications 1 à 7, caractérisé par le fait que l'épaisseur de la seconde couche est inférieure au tiers de l'épaisseur totale du séparateur.

9. Séparateur selon l'une des revendications 1 à 8, caractérisé par le fait que sa densité globale est comprise entre 0,20 et 0,9.

10. Séparateur selon l'une des revendications 1 à 9, caractérisé par le fait qu'il est formé d'une feuille de papier unique composée d'au moins trois couches superposées.

11. Séparateur selon l'une des revendications 1 à 10, caractérisé par le fait qu'il comprend une première couche (31) ayant une épaisseur de l'ordre de 90μm et une densité de l'ordre de 0,3 et une seconde couche (32) ayant une épaisseur de l'ordre de 10μm et une densité de l'ordre de 0,8.

12. Séparateur selon l'une des revendications 1 à 10, caractérisé par le fait qu'il comprend une première couche (31) ayant une épaisseur de l'ordre de 76μm et une densité de l'ordre de 0,3 et une seconde couche (32) ayant une épaisseur de l'ordre de 10μm et une densité de l'ordre de 0,8.

13. Condensateur obtenu à l'aide d'un séparateur conforme à l'une des revendications 1 à 12.

3 FEUILLES DE PAPIER 50µm DENSITE 0,45

FIG_1

2 FEUILLES DE PAPIER    50µm    DENSITE   0,3 +
1 FEUILLE DE PAPIER    20µm    DENSITE   0,8

FIG_2

FIG_3

## FIG. 4 - CONDENSATEURS ELECTROLYTIQUES DE MEME ENCOMBREMENT

| | EPAISSEUR e ($\mu$m) | QUANTITE D'ELECTROLYTE (E) | RESISTANCE SERIE $R_b$ (m $\Omega$) (100 KHz - 40°) |
|---|---|---|---|
| SEPARATEUR CLASSIQUE<br><br>2 FILMS DE 50 $\mu$m<br>DENSITE 0,45 | 100 | 7,06 | 17,4 |
| SEPARATEUR CLASSIQUE<br><br>2 FILMS 40 $\mu$m<br>DENSITE 0,45 +<br>1 FILM 20 $\mu$m<br>DENSITE 0,8 | 100 | 6,60 | 36 |
| SEPARATEUR CLASSIQUE<br><br>1 FILM 60 $\mu$m<br>DENSITE 0,3 +<br>2 FILMS 20 $\mu$m<br>DENSITE 0,8 | 100 | 6,72 | 51 |
| INVENTION<br><br>1 FILM COMPRENANT<br>1 COUCHE 90 $\mu$m<br>DENSITE 0,3 +<br>1 COUCHE 10 $\mu$m<br>DENSITE 0,8 | 100 | 7,72 | 20 |

## FIG.5 - CONDENSATEURS ELECTROLYTIQUES COMPRENANT LA MEME QUANTITE D'ELECTROLYTE

|  | EPAISSEUR e ($\mu$m) | QUANTITE D'ELECTROLYTE (E) | RESISTANCE SERIE $R_{\delta}$ (m $\Omega$) (100 KHz - 40°) |
|---|---|---|---|
| SEPARATEUR CLASSIQUE<br><br>2 FILMS DE 46,75 $\mu$m DENSITE 0,45 | 93,5 | 6,60 | 16,3 |
| SEPARATEUR CLASSIQUE<br><br>2 FILMS DE 40 $\mu$m DENSITE 0,45 +<br>1 FILM DE 20 $\mu$m DENSITE 0,8 | 100 | 6,60 | 36 |
| SEPARATEUR CLASSIQUE<br><br>1 FILM DE 58 $\mu$m DENSITE 0,3 +<br>2 FILMS DE 20 $\mu$m DENSITE 0,8 | 98 | 6,60 | 50 |
| INVENTION<br><br>1 FILM COMPRENANT 1 COUCHE 76 $\mu$m DENSITE 0,3 +<br>1 COUCHE 10 $\mu$m DENSITE 0,8 | 86 | 6,60 | 18 |

## FIG. 6 - CONDENSATEURS ELECTROLYTIQUES DE MEME RESISTANCE SERIE

| | EPAISSEUR e (μm) | QUANTITE D'ELECTROLYTE (E) | RESISTANCE SERIE R$_b$ (m Ω) (100 KHz - 40°) |
|---|---|---|---|
| SEPARATEUR CLASSIQUE<br><br>3 FILMS DE 60 μm<br>DENSITE 0,3 | 180 | 14,47 | 20 |
| SEPARATEUR CLASSIQUE<br><br>2 FILMS DE 60 μm<br>DENSITE 0,45 | 120 | 8,47 | 20 |
| SEPARATEUR CLASSIQUE<br><br>1 FILM DE 20 μm<br>DENSITE 0,8 | 20 | 0,95 | 20 |
| INVENTION<br><br>1 FILM COMPRENANT<br>1 COUCHE 90 μm<br>DENSITE 0,3 +<br>1 COUCHE 10 μm<br>DENSITE 0,8 | 100 | 7,72 | 20 |

FIG.7

EP 0 497 676 A1

**Office européen des brevets**

# RAPPORT DE RECHERCHE EUROPEENNE

Numero de la demande

EP 92 40 0201
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-1 542 575 (DEXTER CORP.)<br><br>* page 1, ligne 58 - page 2, ligne 36 *<br>--- | 1-5,<br>8-10,12,<br>13 | H01G9/02 |
| Y | ELECTROCHEMICAL TECHNOLOGY.<br>vol. 6, no. 5-6, Juin 1968, PRINCETON, NEW JERSEY US<br>pages 172 - 178;<br>ALWITT: 'Electrical conductivity of paper and cellophane in aqueous and nonaqueous electrolyte solutions'<br>* page 172, colonne de gauche; tableau I *<br>--- | 1-5,<br>8-10,12,<br>13 | |
| A | US-A-2 199 447 (RUBEN)<br>* page 1, colonne de gauche, ligne 53 - colonne de droite, ligne 5 *<br>* page 1, colonne de droite, ligne 51 - page 2, colonne de gauche, ligne 3 *<br>--- | 1,10,13 | |
| A | US-A-2 288 157 (DUNLEAVEY)<br>* page 2, colonne de gauche, ligne 26 - ligne 66 *<br><br>--- | 1-5,13 | **DOMAINES TECHNIQUES RECHERCHES (Int. Cl.5)** |
| A | DE-C-976 481 (RADIO PATENTS COMPANY)<br>* le document en entier *<br>--- | 1,10,13 | H01G |
| A | DE-C-913 452 (SIEMENS & HALSKE AG)<br><br>* page 2, ligne 19 - ligne 33 *<br>* page 2, ligne 66 - ligne 79 *<br>--- | 1,5,8,<br>10,11,13 | |
| A | FR-A-2 391 536 (NIPPON KODOSHI PAPER CO.)<br>* page 1, ligne 38 - page 2, ligne 4 *<br>--- | 1-7,13 | |
| | -/-- | | |

Le présent rapport a été établi pour toutes les revendications

| Lieu de la recherche | Date d'achèvement de la recherche | Examinateur |
|---|---|---|
| LA HAYE | 13 AVRIL 1992 | MES L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P0402)

Office européen
des brevets

## RAPPORT DE RECHERCHE EUROPEENNE

Numero de la demande

EP    92 40 0201
Page 2

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN<br>vol. 14, no. 163 (E-910)(4106) 29 Mars 1990<br>& JP-A-2 020 012 ( NIPPON CHEMICON CORP. ) 23 Janvier 1990<br>* le document en entier *<br><br>-----  | 1,6,13 | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 13 AVRIL 1992 | MES L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)